# EUROPEAN PATENT APPLICATION

(11) **EP 4 454 751 A1**
(43) Date of publication of application: **30.10.2024**
(21) Application number: 23169378.9
(22) Date of filing: 24.04.2023
(51) Int. Cl.: B01J 20/08, B01D 39/00, B01D 53/02, B01J 20/22, B01J 20/32, B01J 21/06, B01J 21/18, B01J 23/34, B01J 29/00, A61L 9/20, B01D 53/04, B01J 20/28

(54) **ADSORPTION SYSTEM FOR FLUIDS AND GAS DEPOLLUTION APPARATUS CONTAINING THE SAME AND ITS USE**

(71) Applicant: Calistair SAS, 77000 Vaux-le-Pénil (FR)
(72) Inventor: Taranto, Jérôme, 77000 Vaux-le-Pénil (FR)
(74) Representative: Kröncke, Rolf

(57) **Abstract**

The present invention relates in a first aspect to an adsorption system for fluids comprising a metal organic framework (MOF) and a support. In addition, a gas depollution apparatus comprising the adsorption system according to present invention is provided as well as the use of the adsorption system or the gas depollution apparatus for depollution of fluids, in particular, gases. Moreover, the method for preparing an adsorption system according to the present invention is described.

## Description

The present invention relates in a first aspect to an adsorption system for fluids comprising a metal organic framework (MOF) and a support. In addition, a gas depollution apparatus comprising the adsorption system according to present invention is provided as well as the use of the adsorption system or the gas depollution apparatus for depollution of fluids, in particular, gases. Moreover, the method for preparing an adsorption system according to the present invention is described.

### Prior Art

The depollution of gases and in generally is widely needed and used. Contaminants within the fluids, especially within air, can be of various types. Typically, within gases the contaminants may be divided into particles, gaseous or volatile chemical contaminants as well as biological contaminants. The biological contaminants contain all types of microorganisms, such as bacterial, fungi including their spores or molds but also viruses, phages and the like.

In particular, adsorption of harmful substances from environment is still a substantial strategy since it operates under mild conditions, requires low investment and do not release toxic byproducts. Of course, adsorption of harmful substances requires effective adsorbance. These harmful substances present in fluids, like air, include chemical as well as biological harmful substances, e.g. like propellants but also compounds useful as chemical weapons and biological contaminants useful in biological weapons as well.

Today suitable materials for adsorption of harmful substances from the fluids include porous materials. In particular, presently zeolites as well as activated carbon are widely applied.

Further, a new class of porous crystalline materials has been described. Namely, the so-called metal organic frameworks (MOFs) have been successfully applied for the removal of hazardous substances. MOFs are obtained by the coordination bond between metal ions or clusters and organic linkers and the synthesis can be done via various methods. MOFs are hybrid coordination structures formed by metal clusters comprising metal ions coordinated by multi-functional organic ligands. MOFs are in the form of 1-, 2- or 3-dimensional structures that can be highly porous.

MOFs have been described as suitable materials for adsorption of substances from fluids, in particular gases. For example, WO 2016/000032 A1 describes host guest metal organic framework systems. Firstly in 2013, Thuy Van Nguyen Thi et al., 2013 Adv. Nat. Sci: Nanosci. Nanotechnol., 4035016, describes the synthesis of MOF-199 and application to CO₂ adsorption.

Moreover, WO 2018/065555 discloses MOF and methods for their manufacture. The MOF described therein allows storing and separation of various types of gases including methane, oxygen and nitrogen as well as toxic industrial gases, and, in addition, warfare reagents, such as sarin, mustard gas and derivatives thereof.

Various possibilities of depolluting fluids are known in the art, including mechanical depollution means as well as physical or chemical methods. Typical mechanical means include filter systems, like HEPA filters, particulate filter, or the like. However, these types of mechanical filters suffer from various disadvantages including the requirement of cleaning and replacement, decreasing filter performance over time, in particular with respect to biological contaminants as well as the saturation of the filter system resulting in an increased flow resistance. Thus, mechanical filter systems may be part of a filter system, however, are not sufficient for depollution of gases in general

Other systems are known in the art including plasma, ionization, ozonation or catalysts. With respect to catalysts, various different types of catalysts have been described in the art including combination of different types of catalysts accordingly. However, a main issue with adsorption systems and filter systems for fluids, in particular gases, is a possible regeneration of the adsorbent material present in the adsorption system accordingly, without loss of performance. That is, although some materials are known in the art, like zeolite, regenerated zeolites generally have a loss of adsorption capacity of about 20% every regeneration cycle.

Moreover, with standard adsorbents, there's not any clue indicating the threshold of the adsorbent saturation except when it is ever too late and gases pass through the adsorbent.

Another issue is that adsorbent particles cannot easily be coated over or inside any kind of support. Generally, coating methods use solvents. Standard adsorbents such as activated carbon cannot be dipped into solvents as they are then saturated and cannot be regenerated

Hence, there is an ongoing need to provide suitable adsorbent system allowing regeneration of the same having a high grade of performance in particular with respect to chemical and biological substances. These are particularly useful also in the field of chemical or biological weapons.

In particular, it is desired to provide adsorption systems for fluids suitable for regeneration. In addition, inexpensive and easily producible adsorption systems should be provided whereby the material allows to have individual design of the adsorption system accordingly.

### Brief description of the present invention

In a first aspect, the present invention relates to an adsorption system for fluids comprising
i) a metal organic framework (MOF) and
ii) a support.

In a further aspect, the present invention relates to a gas depollution apparatus comprising the adsorption system according to the present invention, the adsorption system is at least partly provided with a designated flow of the fluids to be depolluted. Moreover, the present invention relates to the use of the adsorption system according to the present invention or the use of the gas depollution apparatus according to the present invention for depollution of fluids, in particular, gases, including harmful substances based on chemical or biological weapons.

Finally, a method for preparing the adsorption system according to the present invention is provided comprising the steps of applying the metal organic framework onto the support, in particular, by applying a dispersion of the MOF material on and/or inside the support.

### Brief description of the drawings

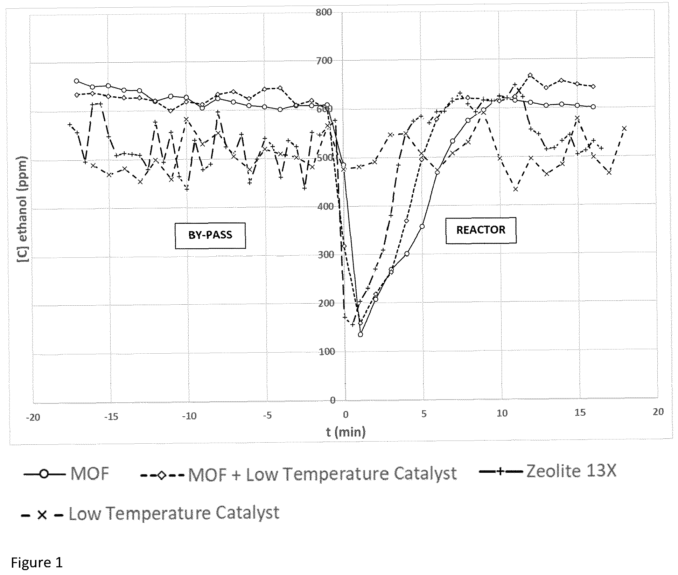

Figure 1: Figure 1 shows the adsorption of ethanol using different adsorption systems. As demonstrated, the adsorption system according to present invention using MOF on a ceramic carrier allows high adsorption capacity which is also true for the embodiment of MOF ceramic carrier additionally containing a non-thermal catalyst which should allow the decomposition of the adsorbed material. The use of a commercially available zeolite results in a lower adsorption capacity where the total amount of adsorbed ethanol is lower compared to the material according to the present invention. For comparison, the non-thermal catalyst mixed with the MOF material is shown having negligible adsorption capacity.

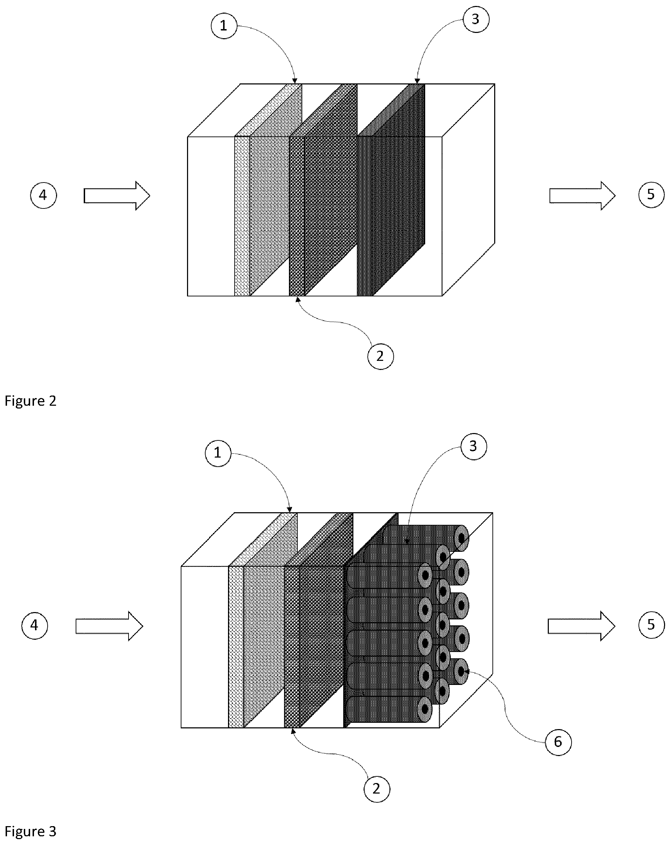

Figure 2: Figure 2 is an example of a gas depollution apparatus according to the present invention. The gas apparatus is composed of a prefilter, a water adsorbent material and a MOF on a foamed ceramic as a carrier material representing a adsorption system according to the present invention.
Figure 3: Figure 3 is a gas depollution apparatus comprising a prefilter system, a water adsorbent filter, and a MOF-catalyst support containing adsorption system according to the present invention. The adsorption system comprises additionally the non-thermal catalyst. In addition, UV lamps for activation of the photocatalytic catalyst is present.

### Details description of the present invention

In a first aspect, the present invention provides an adsorption system for fluids comprising
i) a metal organic framework (MOF) and
ii) a support.

As used herein, the metal organic framework or MOF refers to a synthesized crystalline material composed of metal ions and organic ligands

The support present in the adsorption system according to the present invention is e.g. a known support useful in adsorption systems allowing a flow through of the fluids to be depolluted. Typical examples of the support are porous ceramic carrier, in particular, in an embodiment of the present invention the support is a porous foamed ceramic carrier.

The term "porous foamed ceramic" refers to a foam of ceramic formed by impregnation of an open cells polymeric foam by a colloidal ceramic followed by thermal treatment. Ceramic foam can have many different shapes: plane, cylindrical, pleated, etc.

In an embodiment thereof, the support is a porous foamed ceramic support, in particular, as ceramic support with 10 to 40 pores per inch (ppi) ceramic.
In a further embodiment, the ceramic is an alumina ceramic, in particular, alumina foamed ceramic.

The porous ceramic support allows to individually shape the adsorption system based on the type of application.

That is, adsorption systems containing the ceramic support are particularly useful e.g. in removable gas depollution apparatus.

The skilled person is well aware of suitable porous ceramics useful according to the present invention. In an aspect according to the present invention, the porous ceramic is a porous foamed ceramic carrier, typically open porous ceramic carrier. In an embodiment, the ceramic is an alumina ceramic. Alumina ceramics are known to the skilled person. Other types of ceramics include beryllium oxide ceramics and zirconia ceramics.

Of course, other types of supports are suitable. As said, the support may also be an alumina support or a metal support in general. In addition, filter material may be used as known to the person skilled in the art. The filter material may include filter material based on glass fibers or other types of fibers.

It is preferred that the support allows regeneration of the adsorption system according to the present invention. That is, being thermally stable or chemically stable dependent on the type of regeneration.

Beside the porous foamed ceramics, also the support may have a honeycomb structure with channels allowing a sufficient throughput. For example, the support may be in form of a 3D-monolith structure formed of ceramics or other types of support material.

Moreover, MOF can be easily coated over a large range of supports.

For example, the MOF material may be obtained by a method for producing MOF with recycling of solvents containing water, comprising the steps of
a) providing a metal salt;
b) providing a recycled mother liquid of polar organic solvent containing water and adding an organic linker under stirring;
c) adding the metal salt to the mother liquid containing the organic linker under stirring and/or ultrasonication;
d) reacting under stirring and/or ultrasonication of the metal salt and the organic linker to obtain a MOF;
e) leaving the reaction solution separating the solid MOF from the mother liquid;
f) obtaining i) the separated solid MOF and ii) the mother liquid for reuse in step b).

As used herein, the term "polar solvents containing water" refers to solvents containing detectable amounts of water while water is not the main component of the solvent.

Typically, the amount of water in the polar solvent containing water is less than 10 weight%, like less than 5 weight%. In an embodiment, the mother liquid obtained after separation of the solid MOF represents the polar solvent containing water as defined herein.

The term "organic linker" as used herein refers to organic compounds having suitable substituents for multifunctional coordination of the metal ions, i. e. having more than one coordination site for the metal.

The term "polar organic solvent" as used herein refer to organic polar protic and aprotic solvents.

In addition, as used herein, the term "mother liquid" or "recycled mother liquid" as used herein refers to a recycled polar solvent containing water which may contain at least one of organic linker, metal salt or MOF.

The first method cycle for producing the MOF is comprised of the following steps
a) preparing a first solution of a metal salt in an aqueous solution and a polar organic solvent;
b) preparing a second solution of an organic linker in the same polar organic solvent as used in step a);
c) adding the first solution into the second solution under stirring and/or ultrasonication;
d) reacting the compounds of metal salt and organic linker under stirring and/or ultrasonication obtaining the MOF;
e) leaving the reaction solution allowing to settle the solid MOF;
f) obtaining i) the solid MOF, optionally by centrifugation or filtration, and ii) the mother liquid for recycling and further use in the production of MOF.

In an embodiment, e.g. in the second or further production cycle, the metal salt is added to the recycled mother liquid of polar solvent containing water containing the organic linker in solid form. The solid metal salt is dispersed under stirring and/or ultrasonication.

Also, when preparing the first solution of the metal salt in an aqueous solution and polar organic solvent, the metal salt is added as solids and dissolved or dispersed in said solvent by suitable means, e.g. under stirring.

Suitable metal salts or suitable metal ions forming part of a MOF structure can be selected from group 1 through 16 metals of the EUPAC parallel table of the elements including actinides and lanthanides, and combinations thereof. The metal ion may be selected from Li+, Na+, K+, Rb+, Be2+, Mg2+, Ca2+, Sr2+, Ba2+, Sc3+, Y3+, Ti4+, Zr4+, Hf4+, V5+, V4+, V3+, V2+, Nb3+, Nb5+, Ta5+, Cr6+, Cr3+, Mo6+, Mo3+, Mo4+, W6+, W3+, W4+, Mn4+, Mn3+, Mn2+, Re7+, Re2+, Fe3+, Fe2+, Ru4+, Ru3+, Ru2+, Os3+, Os2+, Co3+, Co2+, Rh3+, Rh2+, Rh+, Ir4+, Ir2+, Ir+, Ni2+, Pd4+, Pd2+, Pt4+, Pt2+, Cu2+, Cu+, Ag+, Au+, Zn2+, Cd2+, Hg2+, B3+, Al3+, Ga3+, In3+, TI3+, Si4+, Si2+ Ge4+, Ge2+, Sn4+, Sn2+, Pb4+, Pb2+, As5+, As3+, Sb5+, Sb3+, Bi5+, Bi3+, La3+ ,Ce3+,Ce4+, Pr3+, Pr4+, Nd3+, Sm3+, Sm2+, Eu3+, Eu2+, Gd3+, Tb3+, Tb4+, Dy3+, Ho3+, Er3+ , Tm3+, Yb3+, Yb2+ , Lu3+, Th4+, U6+; U5+, U4+, U3+, and combination thereof.

In an embodiment, the metal is cupper (II) salt or a metal salt containing Cu. In an embodiment, the cupper (II) salt is at least one of copper nitrate, copper acetate, copper sulfate and copper fluoride.

Of course, other metal ions may be present including zirconium etc. Typically, tetrahedral coordinated transition metal ions like Fe, Co, Cu, or Zn, may be used accordingly. These tetrahedral coordinated transition metal ions allow to form frameworks with suitable organic linkers, for example linkers or ligands as described below, resulting in three dimensional porous solid structures accordingly.
Suitable salts include nitrate, acetate and fluoride salts but may also be coordinated by organic ligands selected from oxalic acid, malonic acid, succinic acid, glutaric acid, phthalic acid, isophthalic acid, terephthalic acid, citric acid, trimesic acid, 1,2,3-triazole, pyrrodiazole, or squaric acid.

As said, the metal ions or metal salts are dispersed or dissolved in a solvent being a mixture of water and organic solvent. For example, the solvent mixture may comprise equal amounts of water, like deionized water, and organic solvent, like ethanol, or other alcohols. Thus, the first solution according to the method of the present invention is formed.

In the further embodiment of the method according to the present invention, namely, wherein recycled mother liquid is used, the metal ions typically in form of solid metal salts are added to the mother liquid containing the organic linker under stirring and/or ultrasonication.

The dissolution or dispersion may be conducted at temperature higher than 10°C. Typically, the metal ions e.g. in form of metal salts are added at temperature higher than 10°C or dispersed at temperature higher than 10°C accordingly.

For example, suitable organic ligands include those ligands listed in WO 2010/075610 or WO 2016/000032 A1. The content of which are include herein in their entirety. Example of organic ligand precursors include, but are not limited to organic ligands of the kind described herein that coordinate the metal ion clusters in the MOF framework. The organic ligands organic linker or organic ligand, which is used herein interchangeably include molecules that have at least two chemical moieties capable of coordinating a metal ion. In some embodiments, these groups comprise carboxylates, phosphonates, sulfonates, N- heterocyclic groups, and combinations thereof.

Suitable organic ligands include those ligands listed in WO 2010/075610 and Filipe A, et.al., Chemical Society Reviews, 2012, Volume 41, pages 1088-1110, the contents of which are included herein in their entirety.

Of course, the organic linker or organic ligands may be functionalized further dependent on the desired use. Suitable functionalities are described e. g. in Zhang, et. al. (2019). Applied Surface Science, 497, 143815. https://doi.org/10.1016/j. apsusc.2019.143815

A preferred organic linker is e.g. trimesic acid also known as benzene-1,3, 5-tricarboxylic acid.

In addition, the polar organic solvent is typically an alcohol, like a C1 - C4 alcohol. In an embodiment, the organic solvent is ethanol while in another embodiment the water is a deionized water.

In an embodiment, the aqueous solution and polar organic solvent is a mixture of water and ethanol.

Also, the mother liquid to be used according to the present invention is typically composed of the polar organic solvent with water further containing remaining starting materials, like organic linker or metal ions or metal salt in solid form or dissolved therein. Typically, the mother liquid contains above 50 % polar organic solvent, like above 50 volume-% ethanol and minor percentage of water.

In an embodiment, the ratio of the metal salt and the organic linker is in between 0.9 to 3, like 0.9 to 2.0.

A skilled person can easily determine the ratio suitable for the desired purpose accordingly.

The MOF thus obtained demonstrates high adsorption capacity also when comparing the same with well-known commercial adsorption as shown below.

In particular, the MOF obtainable according to the above method demonstrates suitable adsorption capacity for fluids including hazardous gases like toxic components or warfare gases.

Hence, the MOF thus obtained is suitable for various applications. Namely, the MOF can be used in various applications and, in addition, the MOF can be provided in various embodiments.

An advantage of the MOF according to the present invention is that the MOF can be provided in form of a slurry or other removable form. That is, devices containing the MOF for adsorption can be provided containing the MOF as adsorption material whereby the MOF material can be exchanged if necessary. Moreover, the MOF allows to provide adsorption material in individualized form. For example, the MOF can be adapted to the requirements of the device with respect to form of the device and, thus, the shaping and design of the MOF can be individualized accordingly. Moreover, the MOF can be provided in form e.g. of pellets, granules or the like as filler of devices accordingly.

In an embodiment of the present invention, namely where adsorbing hydrophilic components, it is possible to identify saturation/regeneration by change of color of the MOF material. For example, when applying the MOF material described in the example, the MOF material can work as an indicator of saturation with hydrophilic molecules due to a change of color from dark purpose into light blue/cyan. Namely, MOF materials being saturated with hydrophilic molecules like water, alcohol, organic acids, ketones, aldehydes, etc, which are typically present in the air results in a change of color into light blue/cyan. Once the MOF/ceramic material is heated, these hydrophilic molecules are vaporized from the material and the color changes to dark purple.

Since hydrophilic molecules are normally present in the air, a change of color generally occurs and can be considered as good indicator in most cases. Only in situations where hydrophobic molecules are adsorbed only, a change of color due to saturation may not occur.

With respect to saturation of the adsorption capacity, in an embodiment, In an embodiment of the invention, the adsorption system according to the present invention further comprises a catalytic component allowing desorption of the adsorbed fluids. The desorption includes oxidation of the adsorbed fluids but may also be affected by other mechanisms. Namely, desorption may occur by diffusion which consist in a movement of molecules from a highly concentrated medium to a lower concentrated other one. For example, in the present case, when the absorber is saturated, gaseous chemical molecules can migrate from the adsorbent to another one due to a difference of concentration gradient. When present, the catalytic component may a desorption activity by oxidizing the adsorbed fluids. By combining the catalytic component mentioned and described further below with the MOF, it is possible to participate from both properties of the component, namely, the high adsorption activity of the MOF the regenerative capacity of the catalyst destroys the pollutants after diffusion.

The catalytic component which may be present in the absorption system according to an embodiment of the present invention may be a catalytic component known to the skilled person suitable in the field of depollution of fluids.

In an embodiment of the present invention, the catalytic composition present in the catalytic system according to the present invention is basically a catalytic composition as described in WO 2021/130388.

That is, in an embodiment of the present invention the first catalyst having photocatalytic activity is titanium dioxide, TiO₂.

Further, the second catalyst is in an embodiment a low temperature catalyst being MnO.

The adsorbent present in the catalytic composition is in an embodiment a zeolite, in particular, zeolite A.

Preparation of the mixture of the three components may be conducted as described in WO 2021/130388. Namely, the mingling of the first catalyst, the second catalyst and the adsorbent is preferably performed before suspending them in the suspension liquid. That is, solid components, e. g. in form of a powder, of each of the components are first mingled and this mixture of the components is then introduced into the suspension liquid to form the slurry which is eventually applied to the porous ceramic catalyst.

The suspension liquid is preferably a liquid or solution in which none of the components are soluble. For example, the solvability of each of the components is below 1 g/l of the suspension liquid, like below 0.1 g/l.

The slurry can be applied to the support, like the ceramic support by various methods, including dipping. In an embodiment, the slurry is supplied via spray coating. Spray coating results in a very durable and consistent coating, especially without any need for providing a separate binder to the slurry. That is, in an embodiment, the composition does not contain a binder accordingly.

In an embodiment of the present invention, a catalytic component present in the adsorption system is a catalytic composition comprising a mixture of
- a first catalyst, having a photocatalytic activity,
- a second catalyst, which is a different molecule than the first catalyst, being a low temperature catalyst, and
- an adsorbent.

In an embodiment, the catalytic composition is a catalytic composition comprising in weight-% in regard to its typical mass:
between 27 and 30 weight-% photo-activated titanium dioxide TiO₂,
between 11 and 14 weight-% manganese monoxide MnO,
between 45 and 59 weight-% synthetic hydrophilic zeolite of type A,
optionally, carbon nanotube (CNT) in an amount of at most 5 weight-% based on the amount of the catalytic mixture.

Moreover, the adsorption system may contain further components useful in adsorption systems. For example, the adsorption system according to the present invention further comprises a moisture adsorbent. Typical moisture adsorbents include: salts (sodium, calcium, potassium salts), silica (gel, beads) and hydrophilic zeolites.

The moisture adsorbents allow to adsorb humidity present in the fluids, like the gas, in particular, breathing air. Dehumidifying the liquid allows to increase the targeted gaseous molecules adsorption capacity of the MOF material present in the adsorption system according to the present invention.

In an embodiment of the adsorption system according to the present invention, the moisture adsorbent is placed in front of the MOF to support it in the direction of the flow of the fluids. That is, the moisture adsorbent adsorbs the moisture present in the fluid before the fluid gets into contact with the MOF, allowing the MOF to adsorb the additional substances in the fluid, like harmful substances, accordingly.

Alternatively, or additionally, the moisture adsorbent may be mixed with the MOF and/or a catalytic composition, if present. For example, the different components are supported on the support as follows:
Various coating processes can be used as Chemical Vapor Deposition (CVD), Physical Vapor Deposition (PVD), dip coating, spin coating, spray coating, electrochemical deposition or atomic layer deposition.

According to the present invention, a simple and cheap way consists to dip the material / support into a first solution composed of MOF (0.1 to 20% w/w, ideally between 1 and 5 %w/w, ideally 2% w/w) and one solvent (generally hydrophilic solvent, ideally ethanol). Water should be avoided or excluded since liquid water may destroy the MOF into small fragments making it inefficient. Some dispersing agents can be added to improve the dispersion of MOF into the solvent. The so-prepared solution needs to be stirred before impregnation onto the support. The material / support can be dipped into the solution or the solution can also be poured or sprayed. Amount of MOF coated over and/or inside the material / support depend on the number of dips. Between each dip, the coated support is heated, for example in an oven or a microwave oven or by infrared lamps. Temperature has to be set in order to be upper than the boiling temperature of the solvent used. Generally, temperature has to be set between 100 and 180°C, ideally 150°C. It must not be upper than 180°C to avoid breaking the MOF crystalline structure. Heating time depends on the selected heating system. Generally, time necessary to fully evaporate solvent is upper than 5 minutes. For example, after each dip, the coated material can be heated in a traditional oven at 150°C during 30 minutes.
The second step consists to coat a non-thermal catalyst over the MOF coating. A second solution is prepared by mixing the powdering catalyst with one solvent (ideally ethanol) in a ratio of 0.1 to 20% w/w, ideally between 2 and 20% w/w, ideally at 10% w/w. As the non-thermal catalyst needs, among others, light to be activated, it is preferred to coat it over the MOF to be illuminated by i.e. UV lamps. To that, the MOF-coated support is dipped into the solution containing the non-thermal catalyst. Water should be avoided or excluded since liquid water may destroy the MOF into small fragments making it inefficient. Some dispersing agents can be added to improve the dispersion of MOF into the solvent. The so-prepared solution needs to be stirred before impregnation onto the support. The material / support can be dipped into the solution or the solution can also be poured or sprayed. Amount of catalyst coated over and/or inside the material / support depend on the number of dips. Between each dip, the coated support is heated, for example in an oven or a microwave oven or by infrared lamps. Temperature has to be set in order to be upper than the boiling temperature of the solvent used. Generally, temperature has to be set between 100 and 180°C, ideally 150°C. It must not be upper than 180°C to avoid breaking the MOF firstly coated. Heating time depends on the selected heating system. Generally, time necessary to fully evaporate solvent is upper than 5 minutes. For example, after each dip, the coated material can be heated in a traditional oven at 150°C during 30 minutes.

In a further aspect, the present invention relates to a gas depollution apparatus comprising an adsorption system according to the present invention. The adsorption system is at least partly provided within a designated flow path of the fluids to be depolluted.

In an embodiment, the water adsorbent filter is separated of the MOF/catalyst material as shown in figure 2 or as shown in figure 3.

The gas depollution apparatus may have different dimensions, for example, being portable, or for use in industry. In an embodiment, the adsorption system may be present in gas masks or other mobile devices. The adsorption system is partly provided with a designated flow path for the gas to be depolluted, preferably, the gas depollution apparatus comprises at least one source of UV radiation arranged in the designated flow path, when a catalyst as described herein is used. Further, the gas depollution apparatus comprises a flow path, which is for example determined by a pipe, tube or housing of the gas depollution apparatus, especially in an inner wall of the housing. The gas depollution apparatus according to the present invention comprises in an embodiment the adsorption system removably. That is, the adsorption system may be provided as a kind of cartridge or insert for the gas depollution apparatus. By removing the adsorption system, it is possible to allow regeneration of the adsorption system. Regeneration may be conducted by thermal treatments (catalytic or not), non-thermal catalytic treatment, treatment under fresh and dry air.

The gas depollution apparatus is particularly useful for depollution of fluids, in particular, gases. As said, the system and apparatus are particularly useful for depollution of harmful substances, including warfare substances.

In figure 2 an embodiment of the gas depollution apparatus is provided. As shown, the polluted air enters the gas depollution apparatus, 4, passing a pre-filter, 1, typically, a filter separating particles from the polluted gas. A fan may be present for controlling the flow and the direction of the polluted gas. After passing the fan, the gas enters a water adsorbent, 2, e.g. material based on silica, like silica gel or material based on zeolite and other known material having water adsorbent activity. The water adsorbent absorbs hydrophilic components present in the air, like water, etc. After reducing humidity of the gas, the gas passes the adsorption system for fluids according to the present invention, namely, the support supported with MOF, 3. The support supported with the MOF, 3, adsorbs the fluids whereby the cleaned gases leave the gas depollution apparatus according to the present invention via the outlet or gas output, 5.

In figure 3 a further embodiment of the gas depollution apparatus according to the present invention is shown therein, the prefilter, 1, the water adsorbent, 2, and the supported carrier containing the MOF, 3, is present. In addition, the non-thermal catalyst is present with the ceramic and the MOF. As shown, the cartridges of foamed ceramic is present with MOF and non-thermal catalyst supported thereto. In said cartridges UV-lamps, 6, are integrated for activation of the photocatalytic catalyst present in the non-thermal catalyst. Thus, beside adsorption of the gases to be depolluted, composition of the same is possible. Hence, the gas output, 5, contains the composed adsorbed material accordingly.

In a further aspect, a method for preparing the adsorption system according to the present invention is provided. Said method comprises the steps of applying a metallic organic framework on the support, in particular, by applying a dispersion of the MOF material on the support.

In an embodiment, the application of the MOF material is performed by pouring the dispersed adsorbent onto the support. Alternatively, the MOF material is applied by dipping the support into the dispersed MOF material.

The solvent useful for dispersing the MOF material is typically a polar organic solvent, like an alcohol. Suitable solvents include ethanol and isopropanol.

Moreover, water or water-based solvents may be present, however, it is preferred that the water content is at most 10 % of the solvent. That is, since high concentrations of water may deactivate the MOF, it is preferred that the MOF after synthesis is provided as a powder. Said powder is added the solvent, ideally with pure ethanol. The MOF: ethanol weighting ratio is advantageously between 1:10 and 1:100 and preferably 1:50.

For increasing binding between MOF and support, a binder, such colloidal silica, or others can be used. However, in an embodiment the binder is absent since it may be detrimental to the pores, thus, reducing chemical molecules accessibility and adsorption efficiency.

The present invention will be described further by way of examples.

MOF material obtained according to EP application 22204284.8 has been prepared and filtered to get a MOF powder. The MOF powder is mixed in ethanol in a ratio of 1:50, e.g. by magnetic stirring and/or in an ultrasound cleaner and/or any kind of mechanical stirring during at least 20 min. A well dispersed MOF power is obtained in a homogenous solution and the solution is directly poured onto the ceramic form. Alternatively, the ceramic form may be dipped into the MOF/ethanol dispersion. Solution can also be sprayed over a support, by use of a spray gun for example. Depending on the number of Pores Per Inch (ppi) into the ceramic support, the weight of the MOF by weight of ceramic vary from 1:100 to 1:1000 each coating. In the present example, with a 30 ppi ceramic, the amount of MOF coated is of 1 g/100 g of ceramic while it will be of 1g/1000g of ceramic with a 10 ppi ceramic used in the present example. This can be explained with the size of Pores being present in the support whereby the MOF solution may pass more easily through the material when pores are bigger, like 10 ppi ceramic compared to the smaller Pores of 30 ppi ceramic. Moreover, a 10 ppi ceramic foam has a lower available surface compare to a 30 ppi.

The dipping may be repeated at least once to increase the weight and thickness of MOF onto the ceramic. In the present example, the dipping was repeated 10 to 20 times. Generally, a dipping between 8 and 12 dips are necessary to get an uniform and well adhesive coating. A higher number of dips increases mass of coated MOF, and so adsorption efficiency.

Between each dip coatings, the MOF/ceramic material has been dried. Dry was conducted either by oven, a heat gun or a microwave oven. Heating was typically at 150°C during 30 minutes. MOF can also be dried under pressure air (between 1 and 4 bars) as ethanol is easily volatile

Generally, the heating should not exceed 220°C since this may mental of the MOF, e. g. the MOF used in the present sample. Namely, the MOF may be calculated and, thus, deactivated using the gas absorption capacity.

Heating exceeding 220°C may also result in a change of color, however, the color may be black due to deactivation. When exceeding 400°C, the color changed into grey being deactivated.

The regeneration in the present example was conducted by heating for 10 minutes in a microwave oven with 900 W (temperature typically varying between 120 and 190°C).

Generally, heating is conducted at a temperature below 220°C for at least 5 to at most 45 minutes. Typically, the heating period is within 25 to 30 minutes. In an embodiment of the present invention, heating for regeneration in general is in an electrical oven with a regulated temperature preferably of 150°C during 30 minutes.

### Adsorption isotherms

Adsorption isotherms shown in figure 1 represent the results of adsorption of ethanol. Namely, the test was conducted as follows:
The ceramic foam impregnated by MOF is firstly heated at 150°C during 30 minutes. Then, the hot sample is placed inside a glass airtight reactor. Fresh clean air passes through the sample during 20 minutes to cold down to ambient temperature. The reactor is then isolated; sample and air inside the isolated reactor are considered as totally clean. Gaseous chemical pollutant is generated in by-pass by using a syringe pump delivering the liquid pollutant into a heated column. Thus, pollutant is instantly vaporized. Once the concentration is stable, polluted air stream is injected inside the reactor and pollutant is analyzed at the output by PID (photoionization detector) or FID (flame ionization detector) or gas chromatography analytics. First, when pollutant passes through the adsorbent (MOF), gas concentration dramatically decreases. Then, once it starts to saturate, concentration increases up to the initial threshold. As shown in figure 1, the material according to the present invention allows to adsorb ethanol in high amounts whereby the embodiment containing the ceramic and MOF demonstrates an adsorption capacity of 13.9 % w/w. The embodiment containing both, the MOF material with the non-thermal catalyst has a slightly decreased adsorption capacity of 11.3 % w/w. However, this is higher than the adsorption capacity of zeolite, a commercially available adsorbing material having an adsorption capacity of 9.0 % w/w only. For comparison, the non-thermal catalyst presents the adsorption system according to the present invention has a negligible adsorption capacity of 0.3 % w/w. Hence, superiority of the adsorption system according to the present invention is demonstrated. When the non-thermal catalyst is present, it is further possible to decompose the adsorbed material, whereby the decomposition may take place during operation of the adsorption system or alternatively, regeneration may take place after removing of the adsorption system, e.g. being present in a cartridge. In addition, the absorbed system may be designed for single use or may be designed for repeated use after regeneration.

### Reference signs:

- 1: pre-filter
- 2: water adsorbent
- 3: foamed ceramic with MOF or MOF and non-thermal catalyst
- 4: gas input
- 5: gas out put
- 6: UV-lamps

## Claims

1. Adsorption system for fluids comprising
i) a metal organic framework (MOF) and
ii) a support.

2. The adsorption system for fluids according to claim 1, wherein the support is selected from a ceramic support, an alumina support, or filter material.

3. The adsorption system for fluids according to claim 1 or 2, wherein the support is a porous ceramic carrier, in particular, is a porous foamed ceramic carrier, like a porous ceramic support with 10 to 40 ppi ceramic.

4. The adsorption system according to any one of the preceding claims, wherein the ceramic is an alumina ceramic, in particular, an alumina foamed ceramic.

5. The adsorption system according to any one of the preceding claims, wherein the MOF comprises a metal of a copper(II).

6. The adsorption system according to any one of the preceding claims, further comprising a catalytic component allowing desorption of the adsorbed fluids, in particular, wherein the catalytic component is a catalytic composition comprising a mixture of a first catalyst having a photo-catalytic activity,
a second catalyst, which is a different molecule than the first catalyst, being a low temperature catalyst, and
an adsorbent.

7. The adsorption system according to claim 6, wherein the catalytic composition is a catalytic composition comprising in weight-% in regard to its typical mass:
between 27 and 30 weight-% photo-activated titanium dioxide TiO₂,
between 11 and 14 weight-% manganese monoxide MnO,
between 45 and 59 weight-% synthetic hydrophilic zeolite of type A,
optionally, carbon nanotube (CNT) in an amount of at most 5 weight-% based on the amount of the catalytic mixture.

8. The adsorption system according to any one of the preceding claims, further comprising a moisture adsorbent.

9. The adsorption system according to claim 8 wherein i) the moisture adsorbent is present in admixture with the MOF and/or the catalytic composition, if present and/or ii) the moisture adsorbent is arranged in front of the MOF in the direction of flow of the fluids.

10. Gas depollution apparatus comprising an adsorption system according to any one of claims 1 to 9, wherein the adsorption system is at least partly provided within a designated flow path of the fluids to be depolluted.

11. Gas depollution apparatus comprising an adsorption system according to claim 10, wherein the gas depollution apparatus is a gas mask or a filter system for adsorption of fluids.

12. The gas depollution apparatus according to claims 10 or 11, wherein the adsorption system is removable.

13. A use of the adsorption system according to any one of claims 1 to 9, or the gas depollution apparatus according to claims 10 to 12, for depollution of fluids, in particular, gases.

14. A method for preparing an adsorption system according to any one of claims 1 to 9, comprising the steps of applying the metallic organic framework onto the support, in particular, by applying a dispersion of the MOF material on the support.

15. The method for preparing an adsorption system according to claim 14,
wherein the application of the MOF material is performed i) by pouring of MOF dispersed in a solvent or ii) by dipping the support into the dispersed MOF material.
